**Europäisches Patentamt**

**European Patent Office**

**Office européen des brevets**

(19)

(11) Numéro de publication: **0 120 774**
**B1**

(12) **FASCICULE DE BREVET EUROPEEN**

(45) Date de publication du fascicule du brevet:
**16.09.87**

(51) Int. Cl.⁴: **H 04 L 27/10, H 04 L 27/22**

(21) Numéro de dépôt: **84400560.3**

(22) Date de dépôt: **20.03.84**

(54) **Modulateur-démodulateur de signaux porteurs d'informations binaires modulés angulairement à phase controlée.**

(30) Priorité: **25.03.83 FR 8304982**
**20.04.83 FR 8306451**

(43) Date de publication de la demande:
**03.10.84 Bulletin 84/40**

(45) Mention de la délivrance du brevet:
**16.09.87 Bulletin 87/38**

(84) Etats contractants désignés:
**DE GB**

(56) Documents cités:
**EP - A - 0 026 035**
**FR - A - 2 312 881**
**US - A - 3 969 590**

**IEEE TRANSACTIONS ON COMMUNICATIONS, vol. COM-30, no. 3, mars 1982, pages 495-509, IEEE, New York, US; R.E. ZIEMER et al.: "Conversion and matched filter approximations for serial minimum-shift keyed modulation"**
**IEEE TRANSACTIONS ON COMMUNICATIONS, vol. COM-28, no. 5, mai 1980, pages 771-777, New York, US; C.R. RYAN et al.: "760 Mbit/s serial MSK microwave modem"**
**THE RADIO AND ELECTRONIC ENGINEER, vol. 44, no. 7, juillet 1974, pages 357-362, Londres, GB; R.C.**

(73) Titulaire: **THOMSON-CSF, 173, Boulevard Haussmann, F-75379 Paris Cedex 08 (FR)**

(72) Inventeur: **Laurent, Pierre, THOMSON-CSF SCPI 173, bld Haussmann, F-75379 Paris Cedex 08 (FR)**

(74) Mandataire: **Lincot, Georges et al, THOMSON-CSF SCPI 19, avenue de Messine, F-75008 Paris (FR)**

(56) References cited: (continuation)
**FRENCH: "Binary transversal filters in data modems" WISSENSCHAFTLICHE BERICHTE AEG-TELEFUNKEN, vol. 54, no. 3, 1981, pages 107-114, Francfort, DE; J. LINDNER: "Modulationsverfahren für die digitale Nachrichtenübertragung (II)"**
**IEEE INTERNATIONAL CONFERENCE ON COMMUNICATIONS, CONFERENCE RECORD, 14-18 juin 1981, Denver, vol. 1, pages 2.4.1 - 2.4.5, New York, US; P. GALKO et al.: "On a class of generalized MSK" ELECTRONICS LETTERS, vol. 15, no. 16, août 1979, pages 489-490, Londres, GB; F.G.A. COUPE: "Digital frequency discriminator"**

# Description

La présente invention concerne les modulateurs et les démodulateurs de signaux porteurs d'informations binaires, modulés angulairement, à phase controlée.

Elle s'applique plus particulièrement à la réalisation de modulateurs et de démodulateurs pour moduler et démoduler des signaux suivant des types de modulation à déplacement de fréquence ou à déplacement de phase, à spectre optimisé, ces signaux étant modulés par un train binaire.

Parmi les procédés à modulations angulaires connus, ceux à sauts de fréquence FSK ou à sauts de phase PSK, où FSK et PSK sont les contractions des termes anglo-saxons «Frequency-Shift Keying» et «Phase-Shift Keying», conduisent à des solutions relativement simples à mettre en œuvre.

Ils ont toutefois l'inconvénient de présenter des spectres de fréquence étendus ce qui interdit de les utiliser pour certaines applications.

Afin d'obtenir des spectres de fréquence de plus en plus étroits, d'autres procédés de modulation ont été proposés, mais la complexité de ceux-ci entraine corrélativement une complexité de réalisation des récepteurs et souvent aussi une dégradation des performances, toutes deux liées aux phénomènes d'intermodulation inter-symbole.

En outre, ces procédés conduisent à des réalisations des modulateurs-démodulateurs spécialement conçus pour moduler des signaux dont la variation de phase a lieu exclusivement pendant la durée d'un bit ou élément binaire d'information, ce qui conduit lorsque les cadences de transmission sont élevées à des densités spectrales très étalées, limitant ainsi dans les systèmes de transmission multicanaux à bandes déterminées, le nombre de canaux sur lesquels il est possible de transmettre.

Le but de l'invention est de pallier les inconvénients précités.

A cet effet, l'invention a pour objet un modulateur et un démodulateur selon les revendications.

Le modulateur selon l'invention a pour principal avantage qu'il permet d'effectuer des modulations angulaires de signaux en considérant ceux-ci comme des signaux modulés en amplitude, ce qui simplifie également les dispositifs démodulateurs des récepteurs chargés de démoduler ces signaux. Il a également pour avantage de pouvoir être utilisé pour moduler des signaux dont la forme et la variation de phase peuvent être quelconques, d'indice de modulation quelconque et dont la durée du signal modulé dû à l'application d'un bit d'information n'est pas limitée simplement à la durée d'un bit. Cette disposition a aussi pour avantage qu'elle permet une suppression quasi-totale de l'intermodulation inter-symbole, qui est d'ordinaire inévitable avec les modulations à phase controlée, et qu'elle permet également d'obtenir un signal démodulé totalement pur, sans le phénomène de «cliks» qui apparaît généralement dans les discriminateurs de phase équipant habituellement ces démodulateurs. Le démodulateur selon l'invention permet également d'obtenir des échantillons dont la forme est particulièrement commode à échantillonner. Chaque échantillon ne dépend pratiquement en effet, que de l'élément binaire courant et n'a pratiquement aucune inter-action avec les échantillons obtenus pour les éléments binaires les plus proches, les transitions sont régulièrement espacées et permettent d'asservir très facilement les dispositifs de synchronisation couplés au démodulateur.

D'autres caractéristiques et avantages de l'invention apparaîtront également à l'aide de la description qui va suivre faite au regard des dessins annexés qui représentent:

la fig. 1 une impulsion de fréquence à partir de laquelle on définit habituellement les procédés de modulation angulaire;

la fig. 2 la variation de la phase $\varphi$ (t) du signal modulant correspondant à l'impulsion de la fréquence montrée à la figure 1;

la fig. 3 l'impulsion de phase généralisée $\psi$ (t);

la fig. 4 la fonction S(t) obtenue en liaison avec les signaux représentés aux figures 1, 2 et 3;

la fig. 5 un exemple de réalisation d'un modulateur de type impulsionnel;

la fig. 6 un exemple de réalisation d'un modulateur de type à déphaseur;

la fig. 7 un exemple de réalisation d'un modulateur de type à deux voies en quadrature;

la fig. 8 un exemple de réalisation d'un modulateur de type MSK.

la fig. 9 un schéma de principe de réalisation d'un démodulateur selon l'invention.

la fig. 10 un graphique représentant l'évolution de la phase $\varphi$(t) d'un signal d'entrée pendant la durée d'un élément d'information binaire.

la fig. 11 un graphique montrant l'évolution de la phase $\psi$(t) d'un signal (FSK) intervenant dans l'expression de la fonction principale Fp(t) pendant une durée de deux éléments d'information binaire.

la fig. 12 un graphique montrant l'évolution de la fonction principale Fp(t) d'un échantillon de signal en relation avec les variations de phase représentées sur les figures 10 et 11.

la fig. 13 une représentation spatio-temporelle des impulsions élémentaires du signal décalées en temps et en phase les unes par rapport aux autres pour une modulation de type MSK.

la fig. 14 la forme d'un échantillon de signal obtenu à la sortie du filtre adapté à la fonction principale Fp(t) de la figure 9.

la fig. 15 la forme d'un échantillon de signal obtenu à la sortie du filtre transversal de la figure 9.

les fig. 16 à 18 les caractéristiques de phase et d'amplitude d'un échantillon de signal dans le cas où la variation de phase due à un bit d'information a lieu sur une durée de 3 bits.

la fig. 19 une représentation spatio-temporelle des impulsions élémentaires d'un signal dont les variations de phases dues à un bit d'information ont lieu pendant une durée de 3 bits.

la fig. 20 un mode de réalisation d'un démodulateur selon l'invention adapté à de faibles débits d'informations.

la fig. 21 un mode de réalisation d'un démodulateur construit en utilisant un composant acoustique à ondes de surface.

Dans les procédés de modulation angulaire, la modulation est définie usuellement à partir d'un impulsion de fréquence g(t), nulle en dehors de l'intervalle de temps (0,LT). LT désigne la durée de variation de phase du signal dû à un bit d'information. LT est encore appelée «durée du support» de la modulation.

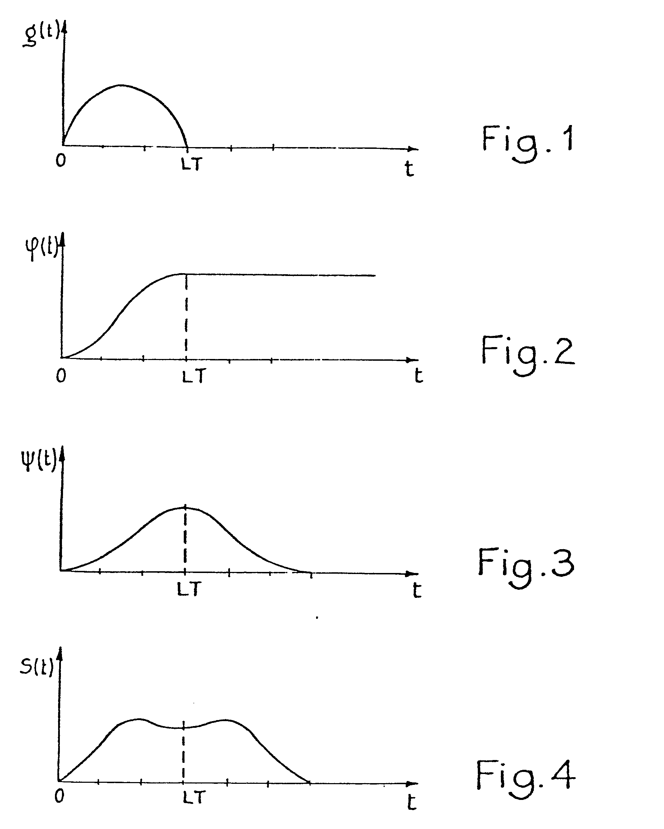

Le graphique représenté à la figure 1 représente une telle impulsion de fréquence, cette impulsion étant représentable par exemple par l'équation:

$$g(t) = \frac{\pi}{4LT} \sin\left(\pi\frac{t}{LT}\right).$$

Cette impulsion de fréquence est normalisée de telle sorte que:

$$\int_0^{LT} g(\Theta)d\Theta = \frac{1}{2} \qquad (1)$$

Pour une application donnée la variation de phase due au $n^{ième}$ bit donné d'information est définie par l'équation

$$\Delta\varphi_n(t) = a_n\varphi(t-nT) \qquad (2)$$

où la variation de phase $\varphi(t)$, caractéristique de la modulation, est donnée par:

$$\varphi(t) = h\int_{-\infty}^{t} 2\pi g(\Theta)d\Theta \qquad (3)$$

Un exemple de représentation des variations de la fonction $\varphi(t)$ est montré à la figure 2.

On peut vérifier que la variation totale de phase due à un bit d'information de rang n est égale à la quantité suivante, h étant une quantité usuellement désignée par «indice de modulation»:

$$\Delta\varphi_n(\infty) = a_n\phi \quad , \quad \phi = h\pi \qquad (4)$$

Le signal complet est alors représentable par une exponentielle complexe notée S(t) définie par l'équation

$$S(t) = \exp j\left[\Theta_0 + \sum_{n=-\infty}^{\infty} \Delta\varphi_n(t)\right] \qquad (5)$$

où la constante $\Theta_0$ est une phase quelconque, fixe, supposée nulle par la suite.

L'approche théorique suivante a permis de dégager les principes de réalisation des modulateurs selon l'invention.

Le fait que g(t) est nulle pour t < et t>LT, implique que $\varphi(t)$ est nul pour t <0, et égal à Φ pour t> LT, ce qui permet de mettre le signal S(t) sous la forme

$$S(t) = \exp j\left[\phi\sum_{n=-\infty}^{N-L} a_n\right] \cdot \prod_{i=0}^{L-1} \exp j\left[a_{N-i}\varphi(t-(N-i)T)\right] \qquad (6)$$

avec $NT \leqslant t \leqslant (N+1)T$.

Pour le terme associé à un bit d'information donné, $a_n$, la variation totale de phase $\varphi(t-nT)$ due à un bit $a_n$ d'information vérifie la relation

$$\exp j\left[a_n\varphi(t-nT)\right] = A(t-nT) + e^{ja_n\phi}B(t-nT) \qquad (7)$$

L'identification des parties réelles et imaginaires des deux membres de la relation (7) conduit immédiatement aux égalités suivantes:

$$A(t) = \frac{\sin(\phi - \varphi(t))}{\sin\phi} \quad , \quad B(t) = \frac{\sin\varphi(t)}{\sin\phi} \qquad (8)$$

Il est alors possible de définir l'impulsion de phase généralisée $\psi(t)$ représentée à la figure 3 par l'ensemble des relations suivantes:

$$\Psi(t) = 0 \text{ pour } t < 0, t > 2LT$$

$$\Psi(t) = \varphi(t) \text{ pour } 0 < t < LT \qquad (9)$$

$$\psi(t) = \phi - \varphi(t-LT) \text{ pour } LT < t < 2LT$$

En posant $J = e^{j\phi}$ $\qquad (10)$

et $S_n(t) = \dfrac{\sin \Psi(t+nT)}{\sin \phi}$ $\qquad (11)$

l'équation (7) s'écrit encore

$$\exp j \left[ a_n \varphi(t-nT) \right] = S_{L-n}(t) + J^{a_n} S_{-n}(t) \qquad (12)$$

et l'équation (6) s'écrit :

$$S(t) = J^{\sum\limits_{n=-\infty}^{N-L} a_n} \cdot \prod_{i=0}^{L-1} \left( S_{L-N+i}(t) + J^{a_{n-i}} S_{-N+i}(t) \right) \qquad (13)$$

avec $NT < t < (N+1)T$

La partie entre crochets de l'expression (12) peut être développée sous la forme d'une sommet de $2^L$ produits, chacun d'eux comportant L fonctions élémentaires $S_i$ ayant une phase fixe, ce qui montre que le signal modulé en phase peut être considéré à un instant donné comme la somme de $2^L$ impulsions élémentaires, déphasées les unes par rapport aux autres et modulées en amplitude.

Un examen détaillé des termes obtenus, non développé ici, et les lois de la logique combinatoire, ont permis de mettre en évidence les faits suivants:

a) Il existe exactement $2^{L-1}$ fonctions différentes

parmi celles-ci, la plus importante, appelée fonction principale, décrivant la partie principale du signal est donnée par:

$$Fp(t) = S_0(t).S_1(t)... S_{L-1}(t), \quad 0 < t < (L+1)T \qquad (14)$$

$$Fp(t) = 0 \text{ pour } t < 0, t > (L+1)T$$

b) Les $M = 2^{L-1}-1$ formes d'onde restantes, appelées fonctions complémentaires $C_i(t)$, sont définies par les relations:

$$C_k(t) = S_0(t).\prod_{i=1}^{L-1} S_{i+L\alpha_{k,i}}(t) \quad 1 < k < M \qquad (15)$$

$$\alpha_{k,i} = 0 \text{ ou } 1 , \quad \sum_i \alpha_{k,i} \neq 0$$

$$C_k(t) = 0 \quad \text{pour } t < 0$$

$$C_k(t) = 0 \text{ pour } t > MIN_i(2LT-T(i+\alpha_{k,i})) = (L-1(k))T$$

c) La phase de l'impulsion décrite par une fonction complémentaire $C_k(\theta)$ et apparaissant au début du n^{ième} bit c'est-à-dire au temps $t = NT$ est donnée par

$$\varphi_{k,n} = \varphi_n - \phi \sum_{i=1}^{L-1} a_{N-i} \cdot \alpha_{k,i} \qquad (16)$$

4

d) Le signal S(t) est alors entièrement décrit par l'équation fondamentale suivante:

$$S(t) = \sum_n e^{j\varphi_n} Fp(t-nT) + \sum_{k=1}^{M} \sum_n e^{j\varphi_{k,n}} C_k(t-nT) \quad (17)$$

e) Enfin l'influence des fonctions complémentaires du signal S(t) est négligeable par rapport à celle de la fonction principale.

Pour L = 1 c'est-à-dire pour des modulations du type MSK ou FSK et leurs variantes de réalisation, ces fonctions sont absentes, le signal est entièrement représentable par la superposition d'impulsions toutes identiques décrites par la fonction principale.

Pour L > 1, on vérifie qu'il existe: une fonction de durée (L–1)T, deux fonctions de durée (L–2)T, etc... jusqu'à $2^{L-2}$ fonctions de durée T

D'une manière très générale, l'énergie véhiculée par les impulsions correspondantes est faible, voire négligeable devant celle de l'impulsion décrite par la fonction principale.

En conséquence, l'équation (17) peut être simplifiée et être mise sous la forme:

$$S(t) \simeq \sum_n e^{j\varphi_n} Fp(t-nT) \quad (18)$$

avec, compte tenu des relations (11) et (14)

$$Fp(t) = \frac{\prod_{i=0}^{L-1} \sin \Psi(t+iT)}{(\sin\phi)^L} \quad (19)$$

L'expression (18) permet d'interpréter le signal S(t) représenté à la figure 4 comme une superposition d'impulsions élémentaires modulées en amplitude par une fonction principale Fp(t) appelée fonction principale, décalées et déphasées les unes par rapport aux autres.

Les angles $\varphi_n$ sont les phases de ces différentes impulsions et sont définis par la relation suivante: $\varphi_n = \varphi_{n-l} + a_n\Phi$.

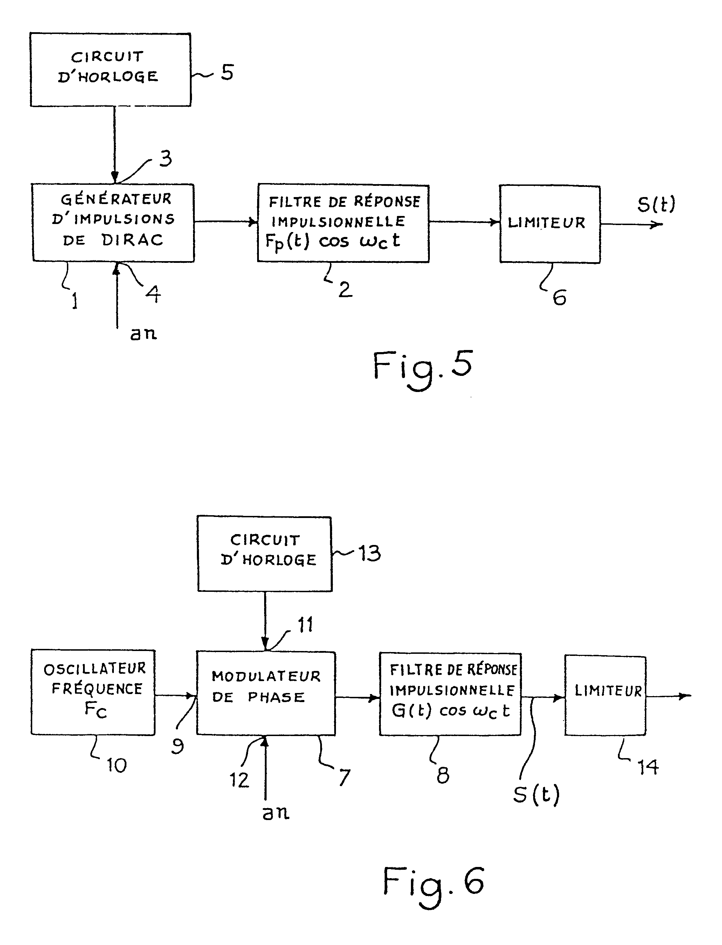

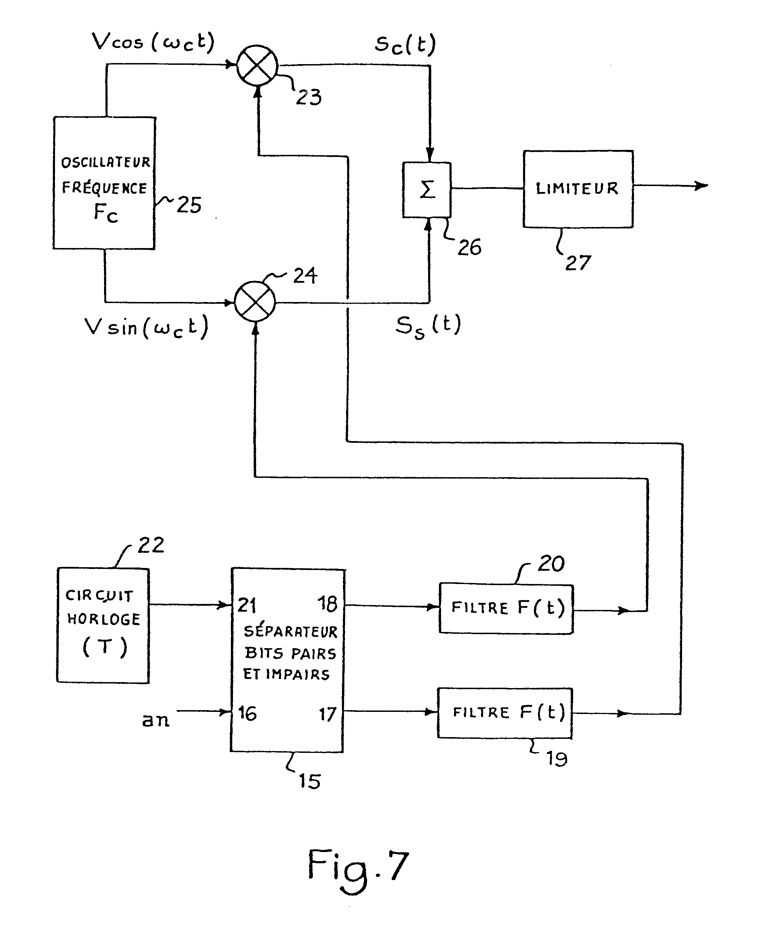

Les modulateurs représentés aux figures 5 à 8 fonctionnent suivant ce principe. On désigne par Fc la fréquence centrale du signal modulé et $\omega_c$ la pulsation correspondante.

Le modulateur représenté à la figure 5, dit de type impulsionnel, comprend un générateur d'impulsions de «Dirac» 1 couplé par sa sortie à un filtre de réponse impulsionnel F(t)cos$\omega_c$t où F(t) est soit égale à Fp(t) ou en est déduite en ayant la même durée. Le générateur d'impulsion de «Dirac» a deux entrées respectivement 3 et 4, l'entrée 3 est reliée à la sortie d'un circuit d'horloge 5 et l'entrée 4 est reliée à des circuits externes au modulateur chargés de transmettre les bits modulants $a_n$. Le circuit d'horloge 5 applique sur l'entrée 3 du générateur d'impulsions de «Dirac» 1 des impulsions d'horloge de période T. Le générateur 1 applique des impulsions de «Dirac» à l'entrée du filtre 2 à chaque instant $T_n = nT+\varepsilon_n$ où $\varepsilon_n$ est petit devant la période T des signaux d'horloge. Le signal S(t) obtenu à la sortie du filtre 2 a alors pour équation

$$S_1(t) = \sum_{n= -\infty}^{+\infty} F(t-T_n) \cos \omega_c(t-T_n)$$

Comme par définition $\varepsilon_n$ est petit, la relation $F(t-T_n) \simeq F(t-nT)$ est vérifiée, de sorte qu'il est possible de déterminer $\varepsilon_n$ pour que la relation suivante soit vérifiée:

$$\omega_c(t-T_n) = (\omega_c t + \varphi_n) \text{ modulo } 2\pi$$

Le décalage temporel $\varepsilon_n$ appliqué à la $n^{ième}$ impulsion sera donc défini par l'équation suivante:

$$\omega_c(t-nT-\varepsilon_n)) = (\omega_c t+\varphi_n) \text{ modulo } 2\pi.$$

Par conséquent la valeur $\varepsilon_n$ est définie par l'équation

$$\varepsilon_n = \frac{1}{\omega_c}(-\varphi_n - n \omega_c T) \text{ modulo } 2\pi \ .$$

Le modulateur de la figure 5 peut être suivi d'un limiteur 6 pour donner au signal fourni par le filtre 2 une amplitude constante si cela est désiré. L'adjonction d'un limiteur 6 n'est cependant pas toujours justifiée en pratique, soit parce qu'il est généralement possible d'optimiser la fonction F(t) pour que le signal résultant à la sortie du filtre ait des variations d'amplitude aussi faibles que possible, soit encore, parce que l'amplificateur qui est connecté à la sortie du modulateur travaille lui-même en régime saturé. La construction du filtre 2 n'offre pas de difficultés, celui-ci pourra être très facilement, par exemple, au moyen d'une ligne acoustique à ondes de surface du type SAW.

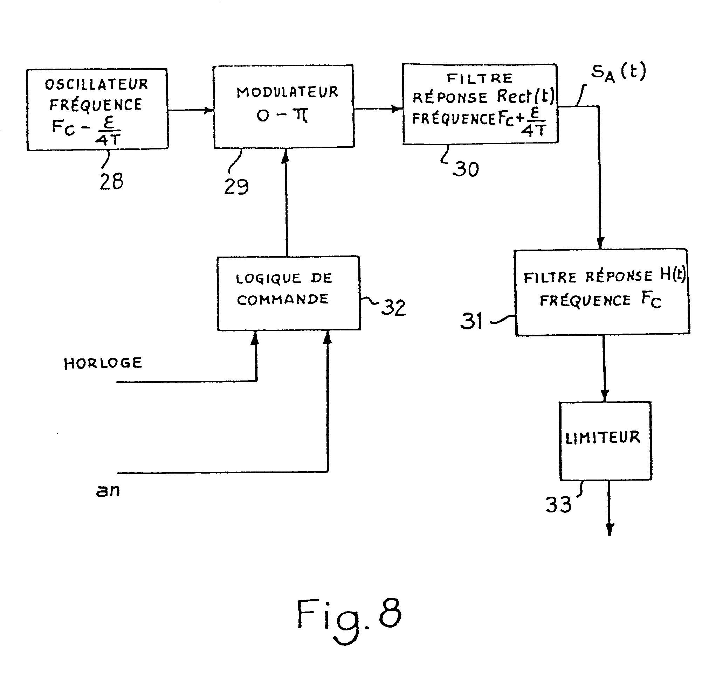

Le modulateur représenté à la figure 6 comprend un modulateur de phase 7 couplé par sa sortie à l'entrée d'un filtre 8 de réponse impulsionnelle G(t)cos $\omega_c$t. Le modulateur de phase 7 est relié par son entrée 9 à la sortie d'un oscillateur 10 de fréquence

$$Fc = \frac{\omega_c}{2\pi}.$$

Le modulateur 7 comprend également deux autres entrées notées respectivement 11 et 12, l'entrée 11 étant reliée à la sortie d'un circuit d'horloge 13, et l'entrée 12 étant reliée à un dispositif extérieur au modulateur de la figure 6 et fournissant les bits modulants $a_n$.

Le modulateur de la figure 6 est un modulateur de type à déphaseur. Le modulateur de phase 7 module la sortie de l'oscillateur 10 avec une phase constante $\varphi_n$ pendant toute la durée du $n^{ième}$ bit. Le circuit d'horloge 13 fournit des impulsions d'horloge au modulateur de phase 7 espacées entre elles par une période T. Le filtre 8 a une réponse impulsionnelle égale à $G(t)\cos \omega_c t$ pendant une durée LT telle que le produit de convolution de la fonction $G(t)$ par un créneau rectangulaire, $Rect(t)$ de durée T soit égale à $F(t)$. Avec

$Rect(t) = 0$ pour $t < 0$ et $t > T$
$Rect(t) = 1$ pour $0 \leqslant t \leqslant T$.

Dans ces conditions le signal $S(t)$ obtenu à la sortie du filtre 8 est égal à

$$S_2(t) = \left( \sum_{n=-\infty}^{+\infty} Rect(t-nT).\cos(\omega_c t + \varphi_n) \right) \cdot (G(t)\cos \omega_c t)$$

$$ou \; S_2(t) = \sum_{n=-\infty}^{\infty} F(t-nT)\cos(\omega_c t + \varphi_n)$$

Tout comme dans le cas du modulateur représenté à la figure 5, le modulateur de la figure 6 peut être suivi d'un limiteur 14 si cela s'avère nécessaire. La réalisation du modulateur de la figure 6 n'offre pas de difficultés, et l'on pourra également tout comme dans le cas de la figure 5 utiliser une ligne acoustique à ondes de surface du type SAW pour réaliser le filtre de réponse impulsionnelle $G(t)$. $\cos \omega_c t$.

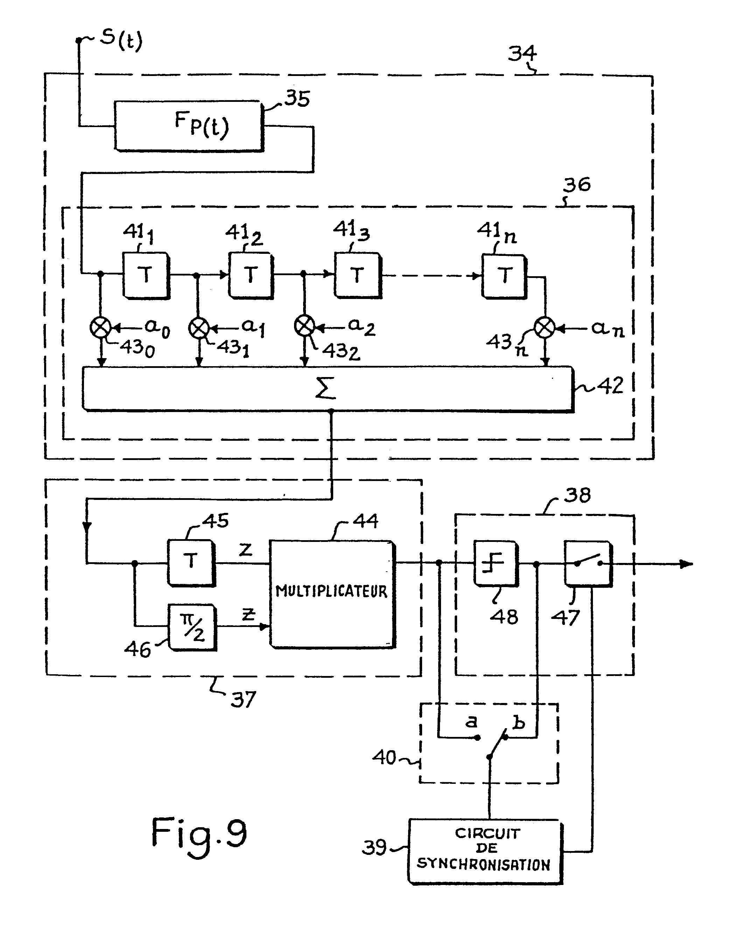

Le modulateur représenté à la figure 7, dit «à deux voies en quadrature», comprend un circuit séparateur de bits 15, pour séparer dans le train de bits modulant $a_n$ appliqués sur une entrée 16 les bits pairs $a_{2k}$ et les bits impairs $a_{2k+1}$. Les bits pairs et impairs fournis respectivement par les sorties 17 et 18 du circuit séparateur 15 sont appliqués respectivement à une entrée des filtres 19 et 20 ayant chacun une réponse impulsionnelle $F(t)$. Le circuit séparateur 15 est synchronisé sur son entrée 21 par des signaux d'horloge fournis par un circuit d'horloge 22 espacés entre eux d'une période T. Les sorties des filters 19 et 20 sont reliées respectivement à une première entrée des circuits multiplicateurs 23 et 24. Une deuxième entrée des circuits multiplicateurs 23 et 24 est reliée à une sortie correspondante d'un oscillateur 25, de fréquence

$$Fc = \frac{\omega_c}{2\pi},$$

délivrant respectivement deux tensions sinusoïdales en quadrature $V \cos \omega_n t$ et $V \sin \omega_c t$. Les sorties des multiplicateurs 23 et 24 sont reliées respectivement à une première entrée et à une deuxième entrée d'un additionneur 26 dont la sortie constitue la sortie du modulateur de la figure 7.

Le fonctionnement du modulateur représenté à la figure 7 est le suivant. Les deux signaux en quadrature $V \cos \omega_c t$ et $V \sin \omega_c t$ fournis par l'oscillateur 25 sont modulés chacun en amplitude par le train d'impulsions décrites par la fonction $F(t)$ appliquées par les sorties des filtres 19 et 20 sur les entrées respectives des multiplicateurs 23 et 24 et dont la polarité dépend des bits modulants $a_n$ appliqués sur l'entrée 16 du circuit séparateur 15. Les signaux obtenus à la sortie des multiplicateurs 23 et 24 sont constitués par une suite d'impulsions élémentaires d'enveloppes $F(t)$ représentables par les équations

$$S_c(t) = \sum_k a_{2k} (-1)^k F(t-2kT)$$

$$S_s(t) = \sum_k a_{2k+1} (-1)^k F(t-(2k+1)T)$$

Les deux signaux modulés en amplitude obtenus à la sortie des multiplicateurs 23 et 24 sont ensuite additionnés par l'additionneur 26 et éventuellement limités par un limiteur 27 placé à la sortie de l'additonneur 26.

Pas plus que les précédents, le modulateur représenté à la figure 7 ne présente de difficultés particulières pour sa réalisation. Dans le cas de la figure 7, les filtres 19 et 20 pourront être réalisé de façon connue à l'aide de filtres transversaux de type numérique.

Le modulateur représenté à la figure 8, dit de type MSK, où MSK est l'abréviation du terme anglo-saxon Minimum Shift Keying, comporte les éléments suivants montés en série, un oscillateur 28 de fréquence centrale

$$F_c - \frac{\varepsilon}{4T}$$

avec $\varepsilon = +1$ ou $-1$, un modulateur de phase 29 de type biphase $(0,\pi)$, un filtre 30 dont la réponse impulsionnelle est un créneau de durée T centrée sur la fréquence

$$Fc + \frac{\varepsilon}{4T},$$

un filtre 31 dont la réponse impulsionnelle $H(t)$ a une durée égale à $(L-1)T$ et est telle que son produit de convolution avec le signal $M(t)$ fourni par la sortie du filtre 30 soit égal à fonction F(t). Dans le cas de la figure 8, le signal fourni par le filtre 30 correspond à une suite d'impulsions décrites par la fonction

$$M(t) = \sin\frac{\pi t}{2T}$$

qui est la fonction principale de la modulation angulaire MSK. La fréquence centrale du filtre 31 est égale à Fc et est un multiple impair de

$$\frac{1}{4T} \cdot$$

Le signal obtenu à la sortie du filtre 30 a pour équation

$$S(t) = \sum_n M(t-nT) \cos (\omega_c t + \theta_n)$$

Si la fréquence centrale est un multiple impair de

$$\frac{1}{4T}$$

deux impulsions successives d'enveloppe M(t) sont décalées de

$$\frac{\pi}{2}$$

à $k\pi$ près si bien que le signal obtenu à la sortie du filtre 30 peut être mis sous la forme

$$S(t) = \sum_k C_{2k}\, M(t-2kT) \cos \omega_c t + \sum_k C_{2k+1}$$

$$M(t-(2k+1)T) \sin \omega_c t$$

La logique de commande 32 du modulateur de phase biphase $(0,\pi)$ est réalisée de sorte que les coefficients $C_i$ vérifient les équations

$$C_{2k} = (-1)^k \prod_{-\infty}^{2k} a_i$$

$$C_{2k+1} = (-1)^k \prod_{-\infty}^{2k+1} a_i$$

Dans l'exemple de réalisation de la figure 8, les filtres 30 et 31 pourront être obtenus, par exemple, à l'aide d'une seule ligne acoustique à ondes de surface SAW dont l'un des transducteurs aura par exemple pour réponse impulsionnelle la réponse du filtre 30 et l'autre la réponse du filtre 31. Comme dans les exemples précédents le filtre 31 pourra éventuellement être suivi d'un limiteur 33.

Un mode de réalisation d'un démodulateur selon l'invention est maintenant décrit à l'aide du schéma de principe représenté à la figure 9.

Le démodulateur représenté par le schéma de principe de la figure 9 comprend un organe de filtrage 34 constitué par un filtre 35 de réception du signal S(t) défini précédemment, couplé par sa sortie à l'entrée d'un circuit de démodulation différentiel 37 au travers d'un égaliseur 36 représenté à l'intérieur d'une ligne en pointillés. Le démodulateur comprend également un dispositif de décision 38 relié par son entrée à la sortie du circuit de démodulation différentiel 37 et commandé par un circuit de synchronisation 39 piloté par l'amplitude des signaux obtenus à la sortie du circuit de démodulation différentiel 37 au travers d'un commutateur 40. Le filtre 35 a une fonction de transfert qui est adaptée pour chaque configuration de signal S(t) à la fonction principale Fp(t) définie précédemment et délivre par conséquent sur sa sortie un signal A(t) égal à l'autocorrélation Fp(t). Fp(-t) de la fonction principale Fp(t) avec le signal S(t) appliqué à l'entrée du démodulateur. L'égaliseur 36 a une structure de filtre transversal et est réalisé de façon connue à partir d'une ligne à retard comprenant plusieur tronçons disposés en série numérotés de $43_1$ à $43_n$ ayant chacun un retard de propagation T correspondant à la durée d'un élément binaire d'information transmis par le signal S(t). Un sommateur 42, comprenant n+1 entrées, possède n entrées reliées respectivement aux sorties des tronçons de ligne à retard $41_1$ à $41_n$ au travers des multiplicateurs numérotés respectivement $41_1$ à $41_n$ et possède également une entrée couplée à l'entrée de l'égaliseur qui reçoit le signal filtré du filtre 35 par l'intermédiaire d'un multiplicateur $43_0$. Les multiplicateurs $43_0$ à $43_n$ ont pour fonction, de pondérer la valeur des impulsions de signal fournies par chaque tronçon élémentaire de ligne à retard ainsi que l'impulsion de signal appliquée à l'entrée de l'égaliseur avant sommation par le sommateur 42, dans le but de minimiser l'intermodulation inter-symboles tout en rendant maximum le rapport signal à bruit.

Le démodulateur différentiel 37, représenté également à l'intérieur d'un rectangle en pointillés, détermine la variation de phase du signal appliqué à son entrée pendant la durée T d'un élément binaire d'information, et est constitué de façon connue par un multiplicateur 44, relié par une première entrée à la sortie du sommateur 42 au travers d'une ligne à retard 45, et par une deuxième entrée à la sortie du sommateur 42 par l'intermédiaire d'un déphaseur 46 de

$$\frac{\pi}{2} \cdot$$

La sortie du démodulateur 37 formée par la sortie du multiplicateur 44 délivre un signal dont l'amplitude est proportionnelle à tout instant au sinus de la différence de phase existant entre le signal et sa réplique retardée de la durée d'un élément binaire par la ligne à retard 45.

Le dispositif de décision 38 comprend un échantillonneur 47 qui est couplé à la sortie du multiplicateur 44 au travers d'un écrêteur 48. L'échantillonneur 47 est commandé par le circuit de synchronisation 39 qui définit les instants d'échantillonnage optimum pour lesquels l'amplitude du signal à la sortie du démodulateur est la plus élevée en valeur absolue. Le circuit de synchronisation 39 peut être piloté indifféremment, soit par les signaux sortant directement du multiplicateur 44, lorsque le commutateur 40 est sur la position marquée «a», soit par les signaux sortant de l'écrêteur 48 lorsque le commutateur est sur la position «b». Le dispositif de décision 38 examine le signe du signal fourni par le circuit de démodulation différentiel 37 à des intervalles réguliers et délivre en sortie la valeur de l'information binaire $a_i$ transmise par le signal S(t).

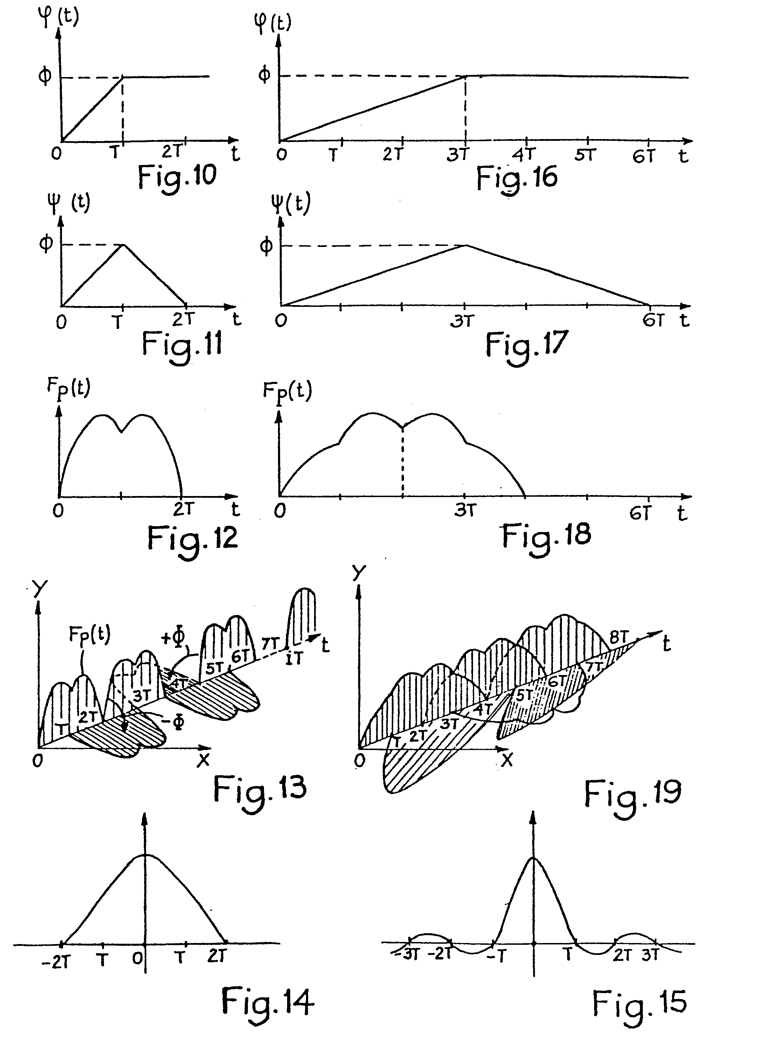

Le fonctionnement du démodulateur de l'invention est maintenant décrit à l'aide des figures 10 à 21.

Les propriétés du démodulateur selon l'invention résultent de l'approche théorique de l'invention selon laquelle tout signal S(t) modulé angulairement suivant une loi binaire est représentable par l'équation (18)

$$S(t) \simeq \sum_n \exp(j\,\varphi_n)\ Fp(t - nT)$$

Dans l'équation (18) le signal S(t) est composé d'impulsion élémentaires de fonction principale Fp(t) toutes identiques modulées en amplitude et en phase les unes par rapport aux autres. $\varphi_n = \varphi_{n-1} + a_n\Phi$ représente la variation de phase du $n^e$ bit, ou élément binaire, qui compose le signal et $a_n$ est égal à +1 ou −1 suivant la valeur de l'information binaire transportée par le signal. $a_n\Phi$ représente la variation totale de phase du signal due à un élément binaire d'information et la fonction Fp(t−nT) dépend de la manière dont est effectuée la variation de phase du signal à un instant donné.

Dans l'exemple montré à la figure 10, la variation de phase $\varphi(t)$ du signal S(t) est linéaire en fonction du temps t, et a lieu pendant la durée de transmission élémentaire T du bit d'information. La phase $\varphi(t)$ varie de la valeur 0 à la valeur $\Phi = h\pi$ dans l'intervalle (O, T), h étant l'indice propre de rotation de phase due à un bit d'information.

L'exemple représenté à la figure 10 correspond à une modulation type FSK où l'information binaire O est caractérisée, en bande de base, par une fréquence $F_0$ et l'information binaire I est caractérisée par une fréquence $F_1$. Dans ce cas la rotation de phase $\Phi$ due au passage d'un bit ou élément binaire d'information de valeur 1 est égale à $2\pi(F_1-F_c)T$.

L'indice de rotation de phase h encore appelé indice de modulation est défini par

$$\frac{2\pi(F_1 - F_c)T}{\pi}$$

où $F_c$ est égal à

$$\frac{1}{2}(F_0 + F_1)$$

et représente en modulation FSK la fréquence centrale de modulation. La fonction principale Fp(t) correspondante du signal S(t) est représentée à la figure 12 et varie pendant la durée 2T de deux bits suivant la loi

$$Fp(t) = \frac{\sin\Psi(t)}{\sin\Phi} \qquad (20)$$

où la variable $\psi(t)$ est égale à $\varphi(t)$ dans l'intervalle (O, T) et est égale à $\Phi - \varphi(t-T)$ dans l'intervalle (T, 2T) de la manière représentée à la figure 11. On peut constater à partir de la formule (20), que la variation d'amplitude de la fonction principale Fp(t) du signal S(t) dépend essentiellement, selon chaque type de modulation, de la variation de phase due à un bit d'information et par conséquent de l'indice h de rotation de phase défini dans chaque type de modulation particulier. L'exemple de la figure 12 représente la forme d'un échantillon de signal S(t) représentée par une fonction Fp(t) correspondant à un indice de variation de phase égale à 0,7. On pourra constater dans ce cas que la courbe est symétrique de part et d'autre de l'instant T, et présente deux maximums de part et d'autre de l'instant T. Dans un autre cas où par exemple l'indice de variation de phase h serait égal à ½ la fonction Fp(t) sera représentable par l'équation

$$\frac{\sin\Psi(t)}{\sin\frac{\pi}{2}}$$

dans l'intervalle (O, 2T) ce qui correspond à l'interprétation désormais classique de la modulation MSK.

Une succession d'impulsions Fp(t) du signal S(t) est représentée à la figure 13 selon un mode de représentation spatio-temporel, formée par un trièdre orthonormé ayant deux axes X et Y par rapport auxquels sont référencés les composantes en phase et en quadrature des impulsions Fp(t) et un axe des temps le long duquel sont référencés les instants de transmission iT des bits d'information.

Comme la réponse fréquentielle du filtre 35 du démodulateur de la figure 9 est adaptée à la fonction principale Fp(t) du signal S(t), le signal obtenu correspondant à la transmission d'un échantillon Fp(t) en sortie du filtre 35 a la forme de la courbe montrée à la figure 14 avec une largeur égale à 4 fois la durée T de transmission d'un bit d'information. Il s'ensuit, lorsque plusieurs échantillons Fp(t) du signal sont transmis à intervalle de temps réguliers espacés de la durée d'un bit T, un recouvrement entre les divers échantillons à la sortie du filtre 35 et par conséquent une production d'un phénomène d'intermodulation entre les échantillons transmis.

Le filtre transversal 36 remédie à cette difficulté en ajustant les valeurs des coefficients $a_o$ à $a_n$

appliqués à l'entrée des multiplicateurs, de manière à minimiser les produits d'intermodulation entre les échantillons et obtenir en sortie du filtre 36 un signal pour chaque échantillon ayant la forme représentée à la figure 15, où l'amplitude maximum est au milieu de l'instant (−T, +T) et les amplitudes nulles apparaissant aux instants multiples de T à l'extérieur de cet intervalle. De cette façon l'échantillonnage qui est opéré, par la suite, par l'échantillonneur 47, pourra être effectué à des instants espacés de T sans qu'il y ait risque d'erreur, par intermodulation des échantillons obtenus.

Le fonctionnement précédemment décrit se généralise à une modulation angulaire de type quelconque dont la variation de phase $\varphi(t)$, due à un bit peut avoir lieu sur un nombre L de bits.

Dans ce cas, la fonction principale Fp(t) représentative d'un échantillon de signal est représentée par la relation (19)

$$Fp(t) = \frac{\prod\limits_{i=0}^{L-1} \sin(\psi(t+iT))}{(\sin\phi)^L}$$

dans l'intervalle de temps (0, (L+1) T).

Les figures 16 à 18 représentent les caractéristiques de phase et d'amplitude d'un échantillon de signal pour le cas où L = 3.

Sur la figure 16, la phase $\varphi(t)$ du signal varie de 0 à $\Phi$ dans l'intervalle (0, 3T) et reste égale, à $\Phi$ pour t > 3T. La fonction $\psi(t)$ correspondante varie de 0 à $\Phi$ dans l'intervalle (0, 3T) et de $\Phi$ à 0 dans l'intervalle (3T, 6T). La fonction Fp(t) varie dans ce cas, suivant une loi égale à

$$Fp(t) = \prod\limits_{i=0}^{3} S_i \quad \text{où } S_i = \frac{\sin\psi(t+iT)}{\sin\phi}$$

dans l'intervalle (0, 4T).

Les fonctions principales Fp(t) décalées de T et déphasées l'une par rapport à l'autre, constituant la suite des échantillons du signal S(t) sont représentées sur la figure 19 dans un système référentiel (X, Y, T) identique à celui de la figure 13.

On vérifie dans ce cas, comme dans le cas précédent, qui correspondait au cas où dans la formule générale L = 1, que les seules fonctions principales décalées et déphasées suffisent pratiquement à elles seules à reconstituer le signal complet.

La restitution du signal est affinée comme dans le cas précédent par le filtre 35 adapté à la fonction Fp(t) caractérisant chaque impulsion du signal et par le filtre tranversal 36 qui supprime les produits d'intermodulation.

Le démodulateur de la figure 9 peut en principe fonctionner de façon satisfaisante quel que soit le niveau su signal d'entrée. Toutefois dans les réalisations pratiques dans lesquelles la modulation est effectuée à amplitude constante, il est nécessaire pour assurer une bonne réjection du bruit et une bonne régulation du niveau du signal, de placer à l'entrée du démodulateur un filtre passe-bande suivi d'un limiteur. De plus, le mode de réalisation du démodulateur qui vient d'être décrit n'est pas unique et d'autres variantes de réalisation sont également possibles en fonction notamment du débit binaire des informations transportées par le signal à démoduler. Quel que soit le type de réalisation, le démodulateur est précédé dans la chaîne de réception par un filtre, ou un ensemble de filtres, qui devront avoir une phase linéaire pour ne pas apporter de distorsion au signal et une bande de bruit telle que lorsque le niveau du signal a sa valeur minimale, c'est-à-dire quand le taux d'erreur est égal au maximum acceptable, le rapport signal à bruit à l'entrée du limiteur soit supérieur à zéro décibel. Le limiteur peut être un limiteur «dur» qui améliore le rapport signal à bruit lorsque celui-ci est supérieur à zéro décibel tout en délivrant en sortie un signal d'amplitude constante. Ces précautions prises, permettent de ne pas distordre le signal appliqué à l'entrée du démodulateur, de le maintenir à une amplitude constante, et d'améliorer légèrement le rapport signal à bruit.

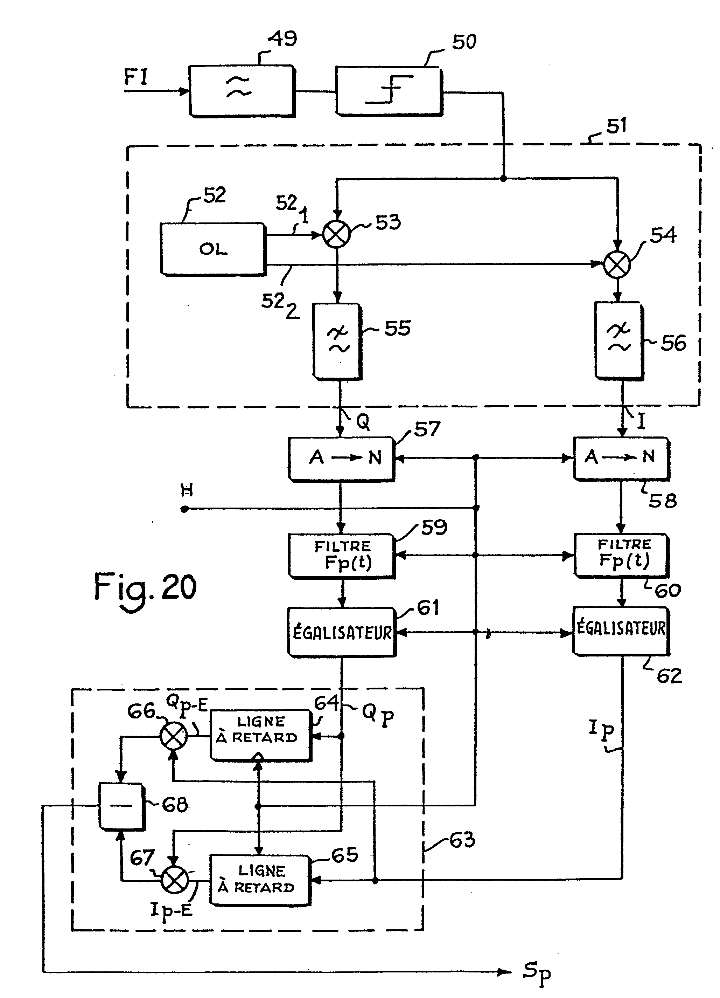

Un variante de réalisation du démodulateur de l'invention est maintenant décrite à l'aide de l'exemple de réalisation montré à la figure 20, qui correspond à une adaptation du dispositif selon l'invention pour les débits faibles. L'exemple représenté à la figure 20 comprend un filtre 49 sur l'entrée duquel est appliqué un signal F1 de fréquence intermédiaire transportant le signal à démoduler, couplé sur sa sortie à l'entrée d'un limiteur 50 dont la sortie est couplée à l'entrée d'un démodulateur 51 à deux voies en quadrature. Le démodulateur 51 comprend un oscillateur local 52, deux multiplicateurs 53 et 54 couplés respectivement à l'entrée de deux filtres 55 et 56. Le multiplicateur 53 a une première entrée reliée à la sortie du limiteur 50 et une deuxième entrée reliée à une sortie $52_1$ de l'oscillateur local 52. De façon similaire le multiplicateur 54 est couplé par une première entrée à la sortie du limiteur 50 et par une deuxième entrée à la sortie $52_2$ de l'oscillateur local 52, en quadrature par rapport à la sortie $52_1$. Les sorties des filtres 55 et 56 délivrent des signaux en quadrature sur deux voies notées respectivement; Q et I. Les signaux obtenus sur chacune des voies Q et I sont appliqués respectivement aux entrées de deux convertisseurs analogique-numérique notées respectivement 57 et 58 constitués par exemple, par des circuits échantillonneurs-bloqueurs pour mémoriser les échantillons du signal analogique présent sur leur entrée, puis échantillonnés à raison de E échantillons par durée T de bit. Les signaux numériques fournis par les sorties des convertisseurs analogiques numériques 57 et 58 sont appliqués respectivement aux entrées de filtres adaptés, respectivement 59 et 60 qui ont pour réponse impulsionnelle une version échantillonnée au pas T/E de la fonction décrivant l'impulsion élémentaire Fp(t) du signal appliqué à l'entrée du démodulateur.

Les sorties des filtres 59 et 60 sont couplées respectivement aux entrées de deux égalisateurs 61 et 62, comportant chacun une ligne à retard numérique à prises espacées chacune de la longueur de transmission correspondante à la durée T d'un bit d'information du signal et un dispositif de pondération et de sommation pour former un filtre transversal identique au filtre 36 de la figure 9. Dans l'exemple de la figure 20 les filtres numériques 59, 60 et les égalisateurs 61, 62 pourront être réalisés à l'aide de lignes à retard analogiques échantillonnées du type BBD ou CCD où les désignations BBD et CCD sont respectivement les abréviations des termes anglo-saxons «bucket brigade devices» et «charge coupled devices». Les sorties des égalisateurs 61 et 62 sont couplées respectivement aux deux entrées d'un démodulateur différentiel 63, une première entrée recevant le $p^{ième}$ échantillon $Q_p$ en sortie de l'égalisateur 61 et une deuxième entrée recevant le $p^{ième}$ échantillon $I_p$ en provenance de l'égalisateur 62. Le démodulateur 63 comprend deux lignes à retard 64 et 65 à E étages, pour réaliser un retard égal à la durée T d'un bit d'information, sur les entrées desquelles sont appliqués respectivement les $p^{ièmes}$ échantillons $Q_p$ et $I_p$ fournis par les égalisateurs 61 et 62. Les sorties des lignes à retard 64 et 65 fournissent par conséquent à l'instant

$$t = \frac{pT}{E}$$

la valeur des échantillons $Q_{p-E}$ et $I_{p-E}$ respectivement. Les échantillons $Q_{p-E}$ et $I_{p-E}$ sont appliqués respectivement à la première entrée des multiplicateurs 66 et 67 qui reçoivent respectivement sur une deuxième entrée la valeur des échantillons $I_p$ et $Q_p$, de sorte que la sortie du multiplicateur 66 délivre un signal qui est égal au produit $I_p \times Q_{p-E}$ et le multiplicateur 67 délivre un signal qui est égal au produit $Q_p \times I_{p-E}$. Un soustracteur 68 est couplé par une première entrée à la sortie du multiplicateur 66 et par une deuxième entrée à la sortie du multiplicateur 67 pour fournir sur sa sortie un signal

$S_p = I_p \cdot Q_{p-E} - Q_p \cdot I_{p-E}.$

Le signe de la quantité $S_p$ renseigne sur la valeur du but d'information p transporté par le signal, les valeurs de p à prendre en compte étant définies par un dispositif de synchronisation bit non représenté.

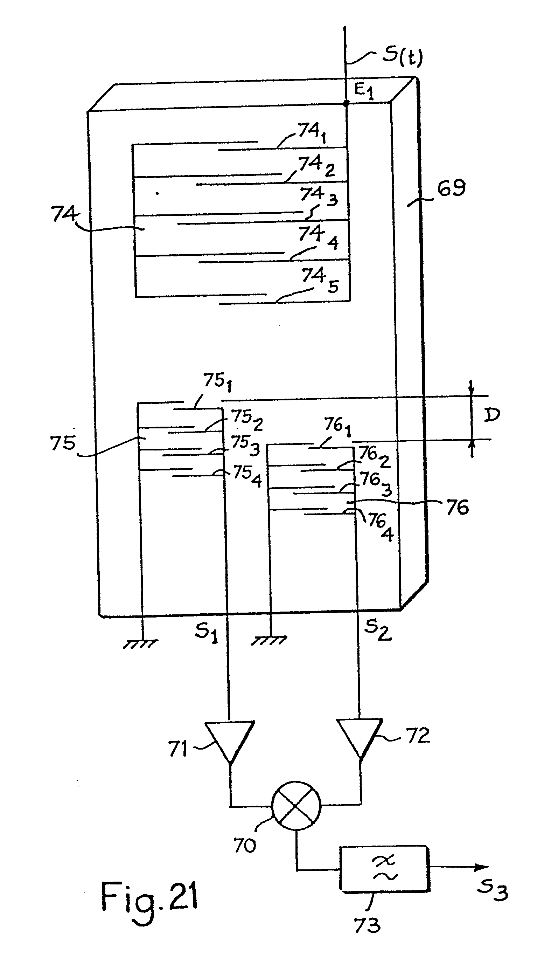

Une autre variante de réalisation plus particulièrement applicable aux débits d'informations élevés est maintenant décrite à l'aide de l'exemple représenté à la figure 21. Le démodulateur représenté à la figure 21 comprend un composant à onde acoustique de surface (SAW) 69 comprenant une entrée $E_1$ et deux sorties $S_1$ et $S_2$, les sorties $S_1$ et $S_2$ étant couplées aux entrées respectives d'un multiplicateur 70 au travers de moyens d'adaptation notés respectivement 71 et 72. La sortie du multiplicateur 70 est couplée à l'entrée d'un filtre passe-bas 73 dont la sortie $S_3$ est couplée à des organes extérieurs au démodulateur non représentés pour effectuer la synchronisation des bits reçus et pour interpréter le signe du signal sortant du filtre 73. Le composant à onde acoustique 69 comprend un transducteur d'entrée 74, gravé de telle sorte que sa réponse impulsionnelle corresponde à celle d'un égalisateur, pour supprimer l'intermodulation intersymboles. Il est constitué par un ensemble de transducteurs élémentaires notés $74_1$ à $74_5$ montés en parallèle et dont les réponses impulsionnelles individuelles correspondent à des impulsions de DIRAC, d'amplitudes variées, décalées de la durée T d'un bit d'information les unes par rapport aux autres. Le premier transducteur de sortie 75 formé des transducteurs élémentaires $75_1$ à $75_4$ n'intercepte que la moitié du faisceau acoustique émis par le transducteur d'entrée et a comme réponse impulsionnelle une impulsion d'enveloppe Fp(t). Le deuxième transducteur de sortie 76 intercepte l'autre moitié du faisceau d'onde acoustique et est décalé par rapport au premier d'une distance

$$D = V(T + \frac{1}{4F_c}),$$

où V représente la vitesse des ondes acoustiques et $F_c$ la fréquence centrale de fonctionnement, pour obtenir le décalage en temps égale à la durée T d'un bit d'information et un déphasage de

$$\frac{\pi}{2}$$

entre les deux transducteurs 75 et 76. Le système ainsi réalisé permet d'obtenir en sortie du démodulateur différentiel le signal démodulé désiré dont l'amplitude est proportionnelle à la composante basse fréquence du produit de deux signaux des fréquences intermédiaires. Au premier signal correspond la fréquence intermédiaire filtrée par un premier filtre dont la réponse impulsionnelle est une impulsion de fréquence intermédiaire et d'enveloppe Fp(t), puis par un deuxième filtre qui est équivalent à une ligne à retard à prises pondérées. Le deuxième signal passe dans un filtre identique au premier, mais subit par rapport au premier signal un déphasage de

$$\frac{\pi}{2}$$

à la fréquence centrale et un retard de durée t correspondant au temps de transmission d'un bit d'information.

Les exemples qui viennent d'être donnés de modes de réalisation préférés de l'invention ne sont pas limitatifs, il va de soi que d'autres variantes de réalisation sont encore possibles sans pour autant sortir du cadre même de l'invention. En particulier, on pourra être amené à modifier pour chaque type de modulation la fonction Fp(t) pour améliorer la synthèse du signal S(t). En effet, cette fonction n'est pas obligatoirement égale à Fp(t), sauf dans le cas où L = 1. Dans les cas où L est différent de 1 la fonction Fp(t) peut avoir avantage à différer de Fp(t) pour tenir compte du fait que l'expression (18) donnant S(t) n'est qu'approchée.

On pourra par exemple obtenir une famille de variantes de réalisations en intervertissant les réponses impulsionnelles du transducteur d'entrée et du transducteur de sortie notamment dans l'exemple de réalisation de la figure 21.

Plusieurs variantes de réalisation du démodulateur selon l'exemple représenté à la figure 20 sont également possibles en considérant par exemple, que la fonction principale Fp(t) du signal S(t) résulte du produit de convolution de deux fonctions $Fp_1(t)$ et $Fp_2(t)$. Dans ce cas le transducteur élémentaire d'entrée de la ligne acoustique sera déterminé pour avoir une réponse impulsionnelle adaptée au signal de fréquence intermédiaire modulé en amplitude suivant la fonction $Fp_1(t)$ et chacun des deux transducteurs de sortie aura une réponse impulsionnelle adaptée au signal de fréquence intermédiaire modulé en amplitude suivant la fonction $Fp_2(t)$.

## Revendications

1. Modulateur de signaux porteurs d'informations binaires modulés angulairement à phase controlée, chaque signal S(t) fourni par le modulateur étant représentable de façon exacte ou approchée sous la forme d'une superposition d'impulsions élémentaires Fp(t) décalées dans le temps les unes par rapport aux autres suivant l'équation

$$S(t) \simeq \Sigma_n \exp(j\varphi_n)\, Fp(t-nT),$$

où T représente la durée de transmission d'un élément binaire d'information, n est un nombre entier relatif désignant le $n^e$ élément binaire et $\varphi_n$ représente la phase du signal correspondant à l'élément binaire n, caractérisé en ce que le modulateur comprend un organe de filtrage (2; 8; 19, 20; 30, 31) adapté à une forme d'onde se déduisant de la fonction principale Fp(t), sur l'entrée duquel sont appliquées des impulsions dont la phase est $\varphi_n$, chaque fois qu'un élément binaire n d'information est appliqué à l'entrée du modulateur, la fonction principale Fp(t) étant définie par l'équation

$$Fp(t) = \frac{\displaystyle\prod_{i=0}^{L-1} \sin(\Psi(t+iT))}{(\sin\Phi)^L}$$

dans l'intervalle de temps (0, (L+1)T), où L représente le nombre d'éléments binaires d'informations consécutives durant lequel la variation de phase associée à un élément binaire n d'information a lieu, $\psi(t)$ une fonction définie dans l'intervalle (0, 2LT) dépendant de la variation de la phase $\varphi(t)$ du signal modulant et $\Phi$ la valeur absolue de la variation totale de phase due à un élément binaire d'information donné.

2. Modulateur selon la revendication 1, caractérisé en ce que pour améliorer la synthèse du signal S(t), l'organe de filtrage (2; 8; 19, 20; 30, 31) fournit des impulsions de durée (L+1)T modulées en amplitude suivant une fonction F(t) déduite de Fp(t) lorsque I > 1.

3. Modulateur selon les revendications 1 et 2, caractérisé en ce que l'organe de filtrage comprend un filtre (2) de réponse impulsionnelle F(t) cos ωct, où $\omega_c$ désigne la pulsation centrale du signal modulé couplé par son entrée à la sortie d'un générateur d'impulsions de «Dirac» (1) déclenché par les éléments binaires modulants.

4. Modulateur selon les revendications 1 et 2, caractérisé en ce que l'organe de filtrage comprend un filtre (68) de réponse impulsionnelle G(t) cosω_ct, G(t) étant déterminé de façon que le produit de convolution de G(t) et d'un créneau rectangulaire de durée T soit égal à F(t), l'entrée du filtre étant reliée à la sortie d'un oscillateur (10) de fréquence Fc par l'intermédiaire d'un modulateur de phase (4) qui module la sortie de l'oscillateur (10) avec une phase constant $\varphi_n$ pendant la durée de tout élément binaire n quelque soit n.

5. Modulateur selon les revendications 1 et 2, caractérisé en ce que l'organe de filtrage comprend un premier (19) et un deuxième (20) filtre de réponse impulsionnelle F(t) couplés aux sorties respectives, paire et impaire, d'un circuit séparateur (15) d'éléments binaires d'information suivant deux voies paires et impaires, le circuit séparateur (15) étant synchronisé par des signaux d'horloge espacés entre eux d'une période T fournis par un circuit d'horloge (22), les sorties des premier et deuxième filtres étant reliées respectivement à une première entrée d'un premier et d'un deuxième multiplicateur (23, 24), les premier et deuxième multiplicateurs étant reliés respectivement à une première et à une deuxième sortie de signaux sinusoïdaux en quadrature de fréquence Fc d'un oscillateur (25), les sorties des premier et deuxième multiplicateurs étant reliées respectivement à une première et une deuxième entrée d'un additionneur (26) dont la sortie fournit le signal S(t) modulé.

6. Modulateur selon les revendications 1 et 2, caractérisé en ce que l'organe de filtrage comprend un premier filtre (30) dont la réponse impulsionnelle est un créneau de durée t, couplé par sa sortie à l'entrée d'un deuxième filtre (31) dont la réponse impulsionnelle H(t) a une durée égale à (L-1)T et est telle que son produit de convolution avec le signal fourni par la sortie du premier filtre (30) soit égal à la fonction F(t), l'entrée du premier filtre étant reliée à la sortie d'un modulateur biphase (29) commandé par les éléments binaires modulants qui module la sortie d'un oscillateur (28) de fréquence

$$Fc - \frac{\varepsilon}{4T}$$

où $\varepsilon = \pm 1$, et en ce que le créneau de durée T correspondant à la réponse impulsionnelle du premier filtre (30) est centré sur la fréquence

$$Fc + \frac{\varepsilon}{4T} \,.$$

7. Modulateur selon l'une quelconque des revendications 1 à 6, caractérisé en ce que la sortie de l'organe de filtrage 2; 8; (31) est couplée à l'entrée d'un limiteur 6; 14; (33) dont la sortie constitue la sortie du modulateur.

8. Modulateur selon l'une quelconque des revendications 1, 2, 3, 4, 6, 7, caractérisé en ce que l'organe de filtrage est constitué au moyen d'une ligne acoustique à onde surface (69).

9. Modulateur selon la revendication 5, caractérisé en ce que les premier et deuxième filtres (19, 20) sont réalisés au moyen de filtres transversaux de type numérique.

10. Démodulateur pour démoduler un signal fourni par un modulateur selon l'une quelconque des revendications 1 à 9 caractérisé en ce qu'il comprend un organe de filtrage (34) pour traiter le signal reçu, constitué par un filtre (35) adapté à chaque impulsion élémentaire Fp(t) et par un égalisateur (36) pondéré pour minimiser l'intermodulation intersymboles, un démodulateur différentiel (37) étant couplé à la sortie de l'organe de filtrage (34) pour délivrer un signal dont les variations de signe correspondent aux valeurs binaires du signal démodulé.

11. Démodulateur selon la revendication 10, caractérisé en ce que l'égalisateur (36) du démodulateur est constitué par un filtre transversale comprenant plusieurs tronçons $(41_1, 41_2, ..., 41_n)$ de ligne à retard de même longueur, ayant chacun un retard correspondant à la durée T de transmission d'un élément binaire d'information et dont les sorties sont pondérées avant d'être appliquées respectivement aux entrées correspondantes d'un sommateur (42), la sortie du sommateur étant couplée à l'entrée du démodulateur différentiel (37).

12. Démodulateur selon les revendications 10 et 11, caractérisé en ce que le démodulateur différentiel (37) délivre un signal dont la grandeur est proportionnelle à tout instant au sinus de la différence de phase existant entre le signal courant fourni à la sortie de l'organe de filtrage et le signal de l'instant précédent, séparé de l'apparition du signal courant de la durée T de transmission d'un élément binaire.

13. Démodulateur selon l'une quelconque des revendications 11 et 12, caractérisé en ce qu'il comprend en outre un circuit de décision (38) couplé à la sortie du démodulateur différentiel pour examiner à intervalles réguliers le signe du signal fourni par le démodulateur différentiel (37) et restituer les valeurs binaires 1 et 0 du signal démodulé.

14. Démodulateur selon l'une quelconque des revendications 10 à 13, caractérisé en ce qu'il comprend un premier démodulateur (51) pour décomposer le signal selon deux voies en quadrature (I et Q), les signaux fournis à la sortie de chacune des voies en quadrature étant appliqués aux entrées respectives d'un premier et d'un deuxième convertisseur analogique-numérique (57, 58) dont les sorties sont échantillonnées à raison de E échantillons par durée d'un élément binaire d'information, les sorties des première et deuxième convertisseurs analogiques-numériques (57, 58) étant couplées respectivement aux entrées d'un premier et d'un deuxième filtre numérique (59, 60) ayant pour réponses impulsionnelles une version échantillonnée au pas

$$\frac{T}{E}$$

de la fonction décrivant l'impulsion élémentaire Fp(t), les sorties de chacun des filtres numériques (59, 60) étant couplées respectivement aux entrées d'un démodulateur différentiel (63) utilisant les échantillons $Q_p$ et $I_p$ de signal fournis par les filtres numériques au travers respectivement d'un premier et d'un deuxième égalisateur (61, 62).

15. Démodulateur selon la revendication 14, caractérisé en ce que les premier et deuxième convertisseurs analogique-numériques (57, 58) comprennent des circuits échantillonneurs-bloqueurs pour mémoriser des échantillons des signaux analogiques fournis par les deux voies en quadrature (I et Q) du démodulateur (51) et en ce que les filtres numériques (59, 60) et les égalisateurs (61, 62) sont constitués par des lignes à retard analogiques échantillonnées.

16. Démodulateur selon les revendications 14 et 15, caractérisé en ce que le démodulateur différentiel (63) fournit sur sa sortie un signal $S_p$ représentable par l'équation $S_p = I_p \times Q_{p-E} - Q_p \times I_{p-E}$ où les quantités $Q_{p-E}$ et $I_{p-E}$ désignent les échantillons de signaux présents aux sorties des égalisateurs à l'instant

$$t = p\,\frac{T}{E} \cdot$$

17. Démodulateur selon l'une quelconque des revendications 10 à 13, caractérisé en ce que l'organe de filtrage (35) et l'égalisateur (36) du démodulateur sont constitués par un composant à onde acoustique de surface (69) comprenant un transducteur d'entrée (74) gravé de sorte que sa réponse impulsionnelle soit celle d'un égalisateur pour supprimer l'intermodulation de symbole; un premier transducteur de sortie (75) et un deuxième transducteur de sortie (76) disposés de façon à intercepter chacun la moitié de l'onde accoustique générée par le transducteur d'entrée, décalée l'un par rapport à l'autre d'une distance

$$D = V(T + \frac{1}{4F_c})$$

où V représente la vitesse des ondes accoustiques et $F_c$ la fréquence centrale de fonctionnement pour obtenir un décalage en temps égal à la durée T d'un élément binaire d'information transporté par le signal S(t) et un déphasage de

$$\frac{\pi}{2}$$

entre les signaux fournis par les premier et deuxième transducteurs de sortie chaque premier et deuxième transducteur de sortie ayant une réponse impulsionnelle correspondant à l'enveloppe de l'impulsion élémentaire Fp(t) du signal S(t), les sorties des premier et deuxième transducteurs de sortie (75, 76) étant couplées aux entrées respectives d'un multiplicateur (70) dont la sortie est couplée à l'entrée d'un filtre passe-bas (73) qui fournit sur sa sortie les impulsions binaires démodulées du signal S(t).

18. Démodulateur selon la revendication 17, caractérisé en ce que le produit de convolution des réponses impulsionnelles du transducteur d'entrée (74) et d'un quelconque des transducteurs de sortie (75, 76) est égal au produit de convolution de la fonction Fp(t) et de la réponse impulsionnelle de l'égaliseur (36) selon la revendication 10.

**Patentansprüche**

1. Modulator für Signale, die Binärinformationen tragen und phasenwinkelmoduliert sind, mit kontrollierter Phase, wobei jedes vom Modulator gelieferte Signal S(t) exakt oder angenähert durch Überlagerung von zeitlich zueinander verschobenen Elementarimpulsen Fp(t) darstellbar ist gemäss der Gleichung

$$S(t) \simeq \Sigma_n \exp(j\varphi_n) Fp(t-nT),$$

wobei T die Dauer der Übertragung eines binären Informationselements, n ein relative ganze Zahl ist, die das n-te Binärelement bezeichnet, und $\varphi_n$ die Phase des dem n-ten Binärelement entsprechenden Signals ist, dadurch gekennzeichnet, dass der Modulator ein Filterorgan (2; 8; 19, 20; 30, 31) enthält, das an eine sich von der Hauptfunktion Fp(t) ableitende Wellenform angepasst ist und an dessen Eingang die Impulse mit der Phase $\varphi_n$ jedesmal angelegt werden, wenn ein binäres Informationselement n an den Eingang des Modulators angelegt wird, wobei die Hauptfunktion Fp(t) durch die Gleichung

$$Fp(t) = \frac{\prod\limits_{i=0}^{L-1} \sin(\psi(t+iT))}{(\sin\phi)^L}$$

im Zeitintervall (0, L+1)T definiert ist, wobei L die Anzahl von aufeinanderfolgenden binären Informationselementen, während der die einem binären Informationselement n zugeordnete Phasenänderung stattfindet, $\psi(t)$ eine im Intervall (0, 2LT) definierte Funktion ist, die von der Änderung der Phase $\varphi(t)$ des modulierenden Signals abhängt, und $\phi$ der Absolutwert der gesamten Phasenänderung aufgrund eines gegebenen binären Informationselements ist.

2. Modulator nach Anspruch 1, dadurch gekennzeichnet, dass zur Verbesserung der Synthese des Signals S(t) das Filterorgan (2; 8; 19, 20; 30, 31) Impulse einer Dauer (L+1)T liefert, die gemäss einer von der Funktion Fp(t) abgeleiteten Funktion F(t) amplitudenmoduliert sind, wenn L>1.

3. Modulator nach den Ansprüchen 1 und 2, dadurch gekennzeichnet, dass das Filterorgan ein Filter (2) mit einer Impulsantwort F(t)cos $\omega_c$t besitzt, wobei $\omega_c$ die zentrale Kreisfrequenz des modulierten Signals bezeichnet und das Filter mit seinem Eingang an den Ausgang eines «Dirac»-Impulsgenerators (1) angeschlossen ist, der von den modulierenden Binärelementen ausgelöst wird.

4. Modulator nach den Ansprüchen 1 und 2, dadurch gekennzeichnet, dass das Filterorgan ein Filter (68) mit einer Impulsantwort G(t)cos $\omega_c$t enthält, wobei G(t) so bestimmt ist, dass das Konvolutionsprodukt von G(t) und einem Rechteckimpuls der Dauer T gleich F(t) ist, wobei der Eingang des Filters an den Ausgang eines Oszillators (10) der Frequenz Fc über einen Phasenmodulator (4) angeschlossen ist, der den Ausgang des Oszillators (10) mit einer konstanten Phase $\varphi_n$ während der Dauer jedes Binärelements n moduliert.

5. Modulator nach den Ansprüchen 1 und 2, dadurch gekennzeichnet, dass das Filterorgan ein erstes (19) und ein zweites Filter (20) mit einer Impulsantwort F(t) aufweist, die an entsprechende geradzahlige und ungeradzahlige Ausgänge eines Trennkreises (15) zur Trennung der binären Informationselemente gemäss zwei Wegen, einem geradzahligen und einem ungeradzahligen, gekoppelt sind, wobei der Trennkreis (15) von Taktsignalen synchronisiert wird, die untereinander einen Abstand von einer Periode T besitzen und von einem Taktkreis (22) geliefert werden, wobei die Ausgänge des ersten und des zweiten Filters je an einen ersten Eingang eines ersten bzw. zweiten Multiplizierers (23, 24) angeschlossen sind und der erste und der zweite Multiplizierer je an einen ersten und einen zweiten Ausgang eines Oszillators (25) angeschlossen sind, der sinusförmige Signale in Quadratur mit der Frequenz Fc liefert, wobei die Ausgänge des ersten und des zweiten Multiplizierers an einen ersten bzw. zweiten Eingang eines Addierers (26) angeschlossen sind, dessen Ausgang das modulierte Signal F(t) liefert.

6. Modulator nach den Ansprüchen 1 und 2, dadurch gekennzeichnet, dass das Filterorgan ein erstes Filter (30) aufweist, dessen Impulsantwort ein Rechteck einer Dauer T ist, und das mit seinem Ausgang an den Eingang eines zweiten Filters (31) angeschlossen ist, dessen Impulsantwort H(t) eine Dauer gleich (L–1)T besitzt und so ausgebildet ist, dass das Konvolutionsprodukt dieser Antwort mit dem vom Ausgang des ersten Filters (30) gelieferten Signal gleich der Funktion F(t) ist, wobei der Eingang des ersten Filters an den Ausgang eines Zweiphasenmodulators (29) angeschlossen ist, der von den modulierenden Binärelementen gesteuert wird und den Ausgang eines Oszillators (28) der Frequenz Fc- $\varepsilon$/4T moduliert mit $\varepsilon = \pm 1$, und dass das Rechteck der Dauer T, das der Impulsantwort des ersten Filters (30) entspricht, auf die Frequenz Fc+$\varepsilon$/4T zentriert ist.

7. Modulator nach einem beliebigen der Ansprüche 1 bis 6, dadurch gekennzeichnet, dass der Ausgang des Filterorgans (2; 8; 31) an den Eingang eines Begrenzers (6; 14; 33) angeschlossen ist, dessen Ausgang den Ausgang des Modulators bildet.

8. Modulator nach einem beliebigen der Ansprüche 1, 2, 3, 4, 6, 7, dadurch gekennzeichnet, dass das Filterorgan von einer akustischen Leitung mit Oberflächenwelle (69) gebildet wird.

9. Modulator nach Anspruch 5, dadurch gekennzeichnet, dass das erste und das zweite Filter (19, 20) von digitalen Transversalfiltern gebildet werden.

10. Demodulator zur Demodulation eines von einem Modulator nach einem beliebigen der Ansprüche 1 bis 9 gelieferten Signals, dadurch gekennzeichnet, dass er ein Filterorgan (34) aufweist, das das empfangene Signal verarbeitet und von einem an jeden Elementarimpuls Fp(t) angepassten Filter (35) und von einem gewichteten Egalisierer (36) gebildet wird, um die Intermodulation zwischen den Symbolen gering zu halten, wobei ein Differentialdemodulator (37) an den Ausgang des Filterorgans (34) gekoppelt ist, um ein Signal zu liefern, dessen Vorzeichenänderungen den Binärwerten des demodulierten Signals entsprechen.

11. Demodulator nach Anspruch 10, dadurch gekennzeichnet, dass der Egalisierer (36) des Demodulators von einem Transversalfilter gebildet wird, das mehrere Verzögerungsleitungsabschnitte gleicher Länge ($41_1, 41_2, \dots 41_n$) besitzt, die je eine Verzögerung entsprechend der Dauer T der Übertragung eines binären Informationselements haben und deren Ausgänge gewichtet werden, ehe sie an die entsprechenden Eingänge eines Summierers (42) angelegt werden, wobei der Ausgang des Summierers an den Eingang des Differentialdemodulators (37) gekoppelt ist.

12. Demodulator nach den Ansprüchen 10 und 11, dadurch gekennzeichnet, dass der Differentialdemodulator (37) ein Signal liefert, dessen Grösse in jedem Augenblick proportional zum Sinus der zwischen dem augenblicklichen an den Ausgang des Filterorgans gelieferten Signal und dem Signal zum vorhergehenden Zeitpunkt, der gegen das Auftreten des augenblicklichen Signals um die Dauer T der Übertragung eines Binärelements verschoben ist, existierenden Phasendifferenz ist.

13. Demodulator nach einem beliebigen der Ansprüche 11 und 12, dadurch gekennzeichnet, dass er ausserdem einen Entscheidungskreis (38) aufweist, der an den Ausgang des Differentialdemodulators angeschlossen ist, um in regelmässigen Intervallen das Vorzeichen des vom Differentialdemodulator (37) gelieferten Signals zu überprüfen und die Werte 1 und 0 des demodulierten Signals auszugeben.

14. Demodulator nach einem beliebigen der Ansprüche 10 bis 13, dadurch gekennzeichnet, dass er einen ersten Demodulator (51) zur Zerlegung des Signals gemäss zwei Kanälen in Quadratur (I und Q) besitzt, wobei die an den Ausgang jedes der Kanäle in Quadratur gelieferten Signale an entsprechende Eingänge eines ersten und zweiten Analog-Digital-Wandlers (57, 58) angelegt werden, deren Ausgänge im Rhythmus von E Tastproben pro Dauer eines binären Informationselements abgetastet werden, wobei die Ausgänge der beiden Analog-Digital-Wandler (57, 58) an die Eingänge eines ersten bzw. zweiten digitalen Filters (59, 60) gekoppelt sind, deren Impulsantwort eine mit dem Tastschritt T/E getastete Version der Funktion ist, die den Elementarimpuls Fp(t) beschreibt, wobei die Ausgänge jedes der digitalen Filter (59, 60), an die Eingänge eines Differentialdemodulators (63) angeschlossen sind, der die von den digitalen Filtern über einen ersten bzw. zweiten Egalisierer (61, 62) gelieferten Tastproben $Q_p$ und $I_p$ des Signals verwendet.

15. Demodulator nach Anspruch 14, dadurch gekennzeichnet, dass die beiden Analog-Digital-Wandler (57, 58) Tast- und Haltekreise enthalten, um die von den beiden Kanälen in Quadratur (I und Q) des Demodulators (51) gelieferten Tastproben der Analogsignale zu speichern, und dass die digitalen Filter (59, 60) und die Egalisierer (61, 62) durch getastete analoge Verzögerungsleitungen gebildet werden.

16. Demodulator nach den Ansprüchen 14 und 15, dadurch gekennzeichnet, dass der Differentialdemodulator (63) an seinem Ausgang ein Signal $S_p$ liefert, das durch die Gleichung $S_p = I_p \times Q_{p-E} - Q_p \times I_{p-E}$ darstellbar ist, in der die Grössen $Q_{p-E}$ und $I_{p-E}$ die Tastproben der an den Ausgängen der Egalisierer zum Zeitpunkt t = pT/E vorliegenden Tastproben bezeichnen.

17. Demodulator nach einem beliebigen der Ansprüche 10 bis 13, dadurch gekennzeichnet, dass das Filterorgan (35) und der Egalisierer (36) des Demodulators von einem Bauteil vom Typ akustische Oberflächenwelle (69) gebildet werden, mit einem Eingangstransduktor (74), der so graviert ist, dass seine Impulsantwort die eines Egalisierers ist, um die Symbolintermodulation zu unterdrücken, mit einem ersten Ausgangstransduktor (75) und einem zweiten Ausgangstransduktor (76), die so angeordnet sind, dass jeder die Hälfte der vom Eingangstransduktor erzeugten akustischen Welle empfängt, und zwar mit einer gegenseitigen Verschiebung um einen Abstand D = V(T+1/4$F_c$), wobei V die Geschwindigkeit der akustischen Wellen und $F_c$ die zentrale Betriebsfrequenz darstellt, um eine Zeitverschiebung gleich der Dauer T eines binären Informationselements, das vom Signal S(t) transportiert wird, und eine Phasenverschiebung um $\pi/2$ zwischen dem vom ersten Ausgangstransduktor gelieferten Signal und dem vom zweiten Ausgangstransduktor gelieferten Signal zu erzielen, wobei die beiden Ausgangstransduktoren eine Impulsantwort entsprechend der Hüllkurve des Elementarimpulses Fp(t) des Signals S(t) besitzen und die Ausgänge der beiden Ausgangstransduktoren (75, 76) je an einen Eingang eines Multiplizierers (70) gekoppelt sind, dessen Ausgang an den Eingang eines Tiefpassfilters (73) gekoppelt ist, welcher an seinem Ausgang die demodulierten Binärimpulse des Signals S(t) liefert.

18. Demodulator nach Anspruch 17, dadurch gekennzeichnet, dass das Konvolutionsprodukt der Impulsantworten des Eingangstransduktors (74) und eines beliebigen der Ausgangstransduktoren (75, 76) gleich dem Konvolutionsprodukt der Funktion Fp(t) und der Impulsantwort des Egalisierers (36) gemäss Anspruch 10 ist.

**Claims**

1. A modulator for signals which bear binary informations and are phase angle modulated with controlled phase, each signal S(t) supplied by the modulator being able to be represented exactly or approximately by the superposition of elementary pulses Fp(t) which are mutually time shifted according to the equation
$S(t) \simeq \Sigma_n \exp(j\varphi_n)Fp(t-nT)$,
wherein T represents the transmission duration of a binary information element, n is a relative integer defining the $n^{th}$ binary element and $\varphi_n$ represents the phase of the signal corresponding to a binary element n, characterized in that the modulator comprises a filter unit (2; 8; 19, 20; 30, 31) adapted to a wave form which can be derived from the main function Fp(t), the input of the filter unit receiving pulses of a phase n any time a binary information element n is applied to the input of the modulator, the main function Fp(t) being defined in the time interval (0, (L+1))T) by the equation

$$Fp(t) = \frac{\prod_{i=0}^{L-1} \sin(\psi(t+iT))}{(\sin\varnothing)^L}$$

wherein L represents the number of successive binary information elements during which the phase variation associated to a binary information element n takes place, $\psi(t)$ is a function defined in the interval (0, 2LT) depending on the variation of the phase $\varphi(t)$ of the modulating signal and $\Phi$ is the absolute value of the total phase variation due to a given binary information element.

2. A modulator according to claim 1, characterized in that, in order to improve the synthesis of the signal S(t), the filter unit (2; 8; 19, 20; 30, 31) supplies pulses of a duration (L+1)T which are amplitude modulated according to a function F(t) derived from Fp(t), if L > 1.

3. A modulator according to claims 1 and 2, characterized in that the filter unit comprises a filter (2) having a pulse response F(t)cos $\omega_{ct}$, wherein $\omega_c$ defines the central angular frequency of the modulated signal, the input of this filter being coupled to the output of a «Dirac» pulse generator (1), which is triggered by the modulating binary elements.

4. A modulator according to claims 1 and 2, characterized in that the filter unit comprises a filter (8) having a pulse response G(t)cos$\omega_{ct}$, wherein G(t) is determined such that the convolution product of G(t) and of a rectangular pulse of duration T is equal to F(t), the input of the filter being connected to the output of an oscillator (10) supplying the frequency Fc, via a phase modulator (4) which modulates the output signal of the oscillator (10) with a constant phase $\varphi_n$ for the duration of any binary element n, independent of n.

5. A modulator according to claims 1 and 2, characterized in that the filter unit comprises a first (19) and a second filter (20) having a pulse response $F_t$, these units being coupled to even and odd outputs respectively of a separator circuit (15) for separating the binary information elements according to two channels, and even and an odd channel, the separator circuit (15) being synchronized by clock signals of a repetition period T, these signals being supplied by a clock circuit (22), the outputs of the first and second filters being respectively connected to a first input of a first and of a second multiplier (22, 24), the first and second multiplier being respectively connected to a first and second output of an oscillator (25) supplying sinus-shaped signals in quadrature relationship of a frequency Fc, the outputs of the first and second multiplier being respectively connected to a first and a second input of an adder (26), the output of which supplies the modulated signal S(t).

6. A modulator according to claims 1 and 2, characterized in that the filter unit comprises a first filter (30), the pulse response of which is a rectangle of duration T, the output of this filter being coupled to the input of a second filter (31), the pulse response H(t) of which has a duration equal to (L–1)T and is such that its convolution product with the signal supplied by the output of the first filter (30) is equal to the function F(t), the input of the first filter being connected to the output of a biphase modulator (29) controlled by the modulating binary element, this modulator modulating the output of an oscillator (28) supplying a frequency Fc-ε/4T, wherein ε = ± 1, and that the rectangle of duration T corresponding to the pulse response of the first filter (30) is centered on the frequency Fc+ ε/4T.

7. A modulator according to any one of claims 1 to 6, characterized in that the output of the filter unit (2; 8; 31) is coupled to the input of a limiter (6; 14; 33), the output of which constitutes the output of the modulator.

8. A modulator according to any one of claims 1, 2, 3, 4, 6, 7, characterized in that the filter unit is constituted by means of an acoustic line of the surface wave type (69).

9. A modulator according to claim 5, characterized in that the first and second filters (19, 20) are realized by means of transversal filters of the digital type.

10. A demodulator for demodulating a signal supplied by a modulator according to any one of claims 1 to 9, characterized in that it comprises a filter unit (34) for processing the received signal, this unit being constituted by a filter (35) adapted to each elementary pulse Fp(t) and by a weighted equalizer (36) in order to minimize the intersymbol intermodulation, a differential demodulator (37) being coupled to the output of the filter unit (34) in order to supply a signal, the sign variations of which correspond to the binary values of the demodulated signal.

11. A demodulator according to claim 10, characterized in that the equalizer (36) of the demodulator is constituted by a transversal filter including a plurality of delay line sections $(41_1. 41_2,... 41_n)$ of equal length, each having a delay time corresponding to the duration T of transmission of a binary information element, the output of the sections being weighted prior to being applied respectively to the corresponding inputs of an adder (42), the output of the adder being coupled to the input of a differential demodulator (37).

12. A demodulator according to claims 10 and 11, characterized in that the differential demodulator (37) supplies a signal, the amplitude of which is proportional at any instant to the sinus of the phase difference existing between the actual signal supplied at the output of the filter unit and the signal of the preceding instant, separated from the appearance of the actual signal by the duration T of transmission of one binary element.

13. A demodulator according to any one of claims 11 and 12, characterized in that it further comprises a decision circuit (38) coupled to the output of the differential demodulator in order to examine at regular intervals the sign of the signal supplied by the differential demodulator (37) and to restitute the binary values 1 and 0 of the demodulated signal.

14. A demodulator according to any one of claims 10 to 13, characterized in that it comprises a first demodulator (51) for decomposing the signal according to two channels in quadrature relationship (I and Q), the signals supplied at the output of each one of the quadrature channels being applied to the respective inputs of a first and a second analog to digital converter (57, 58), the outputs of which are sampled at a rate of E samples for one binary information element, the outputs of the first and second analog to digital converters (57, 58) being respectively coupled to the inputs of a first and a second digital filter (59, 60), the pulse response of which is a sampled edition at the pitch T/E of the function describing the elementary pulse Fp(t), the outputs of each one of the digital filters (59, 60) being respectively coupled to the inputs of a differential demodulator (63) using the signal samples $Q_p$ and $I_p$ supplied by the digital filters through the first and the second equalizer (61, 62) respectively.

15. A demodulator according to claim 14, characterized in that the first and the second analog to digital converters (57, 58) comprise sample and hold circuits for storing the analog signal samples supplied by the two quadrature channels (I and Q) of the demodulator (51), and that the digital filters (59, 60) and the equalizers (61, 62) are constituted by sampled analog delay lines.

16. A demodulator according to claims 14 and 15, characterized in that the differential demodulator (63) supplies on its output a signal $S_p$ which can be described by the equation $S_p = I_p \times Q_{p-E} - Q_p \times I_{p-E}$, wherein the quantities $Q_{p-E}$ and $I_{p-E}$ represent the signal samples available at the outputs of the equalizer at the instant $t = pT/E$.

17. A demodulator according to any one of claims 10 to 13, characterized in that the filter unit (35) and the equalizer (36) of the demodulator are constituted by a surface acoustic wave component (69) comprising an input transducer (74) engraved such that its pulse response is equal to that of an equalizer in order to suppress the symbol intermodulation, a first output transducer (75) and a second output transducer (76) disposed in order to each intercept half of the acoustic wave generated by the input transducer, one output transducer being shifted with respect to the other by a distance $D = V(T+1/4F_c)$, wherein V represents the speed of the acoustic wave and $F_c$ the central operational frequency in order to obtain a time shift equal to the duration T of one binary information element conveyed by the signal S(t) and a phase shift of $\pi/2$ between the signals supplied by the first and the second output transducer, each one of the first and second transducer having a pulse response corresponding to the envelope of the elementary pulse Fp(t) of the signal S(t), the outputs of the first and second output transducers (75, 76) being coupled to the respective inputs of a multiplier (70), the output of which is coupled to the input of a low pass filter (73) supplying on its output the demodulated binary pulses of the signal S(t).

18. A demodulator according to claim 17, characterized in that the convolution product of the pulse responses of the input transducer (74) and any one of the output transducers (75, 76) is equal to the convolution product of the function Fp(t) and the pulse response of the equalizer (36) according to claim 10.

Fig.1

Fig.2

Fig.3

Fig.4

Fig.5

Fig.6

Fig.7

Fig. 8

Fig.9

Fig.10

Fig.16

Fig.11

Fig.17

Fig.12

Fig.18

Fig.13

Fig.19

Fig.14

Fig.15

Fig. 20

Fig.21